# EUROPÄISCHE PATENTANMELDUNG

(11) **EP 1 574 275 A2**
(43) Veröffentlichungstag der Anmeldung: **14.09.2005**
(21) Anmeldenummer: 05004613.5
(22) Anmeldetag: 03.03.2005
(51) Int. Cl.: B23B 31/30

(54) **Spannzylinder**

(30) Priorität: 08.03.2004 DE 102004011120
(71) Anmelder: Hiestand, Karl, D-88630 Pfullendorf (DE)
(72) Erfinder: Hiestand, Karl, D-88630 Pfullendorf (DE)
(74) Vertreter: Engelhardt, Guido

(57) **Zusammenfassung**

Bei einem Spannzylinder (1) für Werkzeugmaschinen mit einem umlaufenden Zylindergehäuse (11) und einem Spannkolben (14), dessen Druckräumen (17, 18) das Druckmittel über Rückschlagventile (21, 22) wechselweise zuführbar ist, ist den Rückschlagventilen (21, 22) jeweils ein Entriegelungskolben (32, 33) zugeordnet, die zum Aufbau eines wählbaren Druckmitteldruckes in den Druckräumen (17, 18) des Spannzylinders (1) gleichzeitig auf die Ventilkörper (25) der Rückschlagventile (21, 22) einwirken. Das den Druckräumen (36, 38) der Entriegelungskolben (32, 33) zuzuführende Druckmittel wird diesen über einen Drehverteiler (71) gesteuert zugeleitet.

Durch diese Ausgestaltung wird erreicht, in den Druckräumen (17, 18) des Spannzylinders (1) jederzeit und kurzfristig einen wählbaren Druckmitteldruck aufzubauen, so dass die auf das zu bearbeitende Werkstück einwirkende Spannkraft ohne großen Bauaufwand verändert werden kann. Dennoch ist bei einer Beschädigung der Druckmittelzuführungsleitungen (44, 45) stets die erforderliche Sicherheit gegeben.

## Beschreibung

Die Erfindung bezieht sich auf einen Spannzylinder für Werkzeugmaschinen mit einem an dieser zu befestigenden umlaufenden Zylindergehäuse und einem in diesen eingesetzten beidseitig von Druckmittel beaufschlagbaren Spannkolben, dessen Druckräumen das Druckmittel über mindestens ein in dem Zylinder angeordnetes, steuerbares und mit einem axial verstellbaren Ventilkörper versehenen Rückschlagventil wechselweise zuführbar ist, wobei die Rückschlagventile mit Betätigungskolben versehen sind, deren Druckräume zum wechselseitigen Öffnen der Rückschlagventile mit dem jeweils beaufschlagten Druckraum des Spannzylinders verbindbar sind, sowie auf ein Verfahren zum Aufbau eines wählbaren Druckmitteldruckes in den Druckräumen eines derartigen Spannzylinders.

Durch die DE 33 06 570 A1 ist eine Spanneinrichtung an Werkzeugmaschinen mit einem umlaufendem Spannzylinder der vorgenannten Ausgestaltung bekannt. Die Rückschlagventile sind hierbei zwar in der Mantelwand des Spannzylinders mit zur Zylinderachse parallelen Verstellrichtungen der Ventilkörper angeordnet, eine zufriedenstellende und vor allem betriebssichere Funktion der Rückschlagventile ist aber nicht gewährleistet. Um ein Rückschlagventil, durch den der in einem Druckraum herrschende Druckmitteldruck bei Störungen, wie z.B. bei einer Beschädigung der Druckmittelzuführungsleitung, gesichert wird, öffnen zu können, ist nämlich dessen Betätigungskolben durch den in dem anderen Druckraum aufgebauten Druckmitteldruck zu beaufschlagen. Ein Öffnen eines Rückschlagventils ist demnach nur möglich, wenn in beiden Druckräumen nahezu gleiche oder in Abhängigkeit von den Flächen der beaufschlagten Bauteile nur geringfügig unterschiedliche Druckmitteldrücke gegeben sind. Eine unmittelbare Absenkung von einem hohen auf einen niederen Druckmitteldruck, wie dies bei Schrupp- und Schlichtarbeiten auf einer Drehmaschine vielfach erforderlich ist, ist daher nicht möglich. Auch werden die Ventilkörper der Rückschlagventile meist nur spaltweise geöffnet, das Füllen eines Druckraumes erfordert daher einen großen Zeitaufwand, die bekannte Spanneinrichtung hat sich demnach in der Praxis nicht bewährt.

Aufgabe der Erfindung ist es daher, einen Spannzylinder mit in dessen umlaufenden Zylindergehäuse eingebauten Rückschlagventilen in der Weise auszubilden, dass in den Druckräumen des Spannzylinders jederzeit und kurzfristig ein wählbarer Druckmitteldruck aufgebaut und somit die auf ein zu bearbeitendes Werkstück einwirkende Spannkraft verändert werden kann, ohne dass es dazu eines großen Bauaufwandes bedarf. Dennoch sollen die Absperrventile fliehkraftunabhängig sein und bei einer Beschädigung der Druckmittelzuführungsleitung die erforderliche Sicherheit bieten, so dass der Spannzylinder sehr vielseitig und rationell einsetzbar ist.

Gemäß der Erfindung wird dies bei einem Spannzylinder der vorgenannten Art dadurch erreicht, dass den Rückschlagventilen jeweils ein durch Druckmittel entgegen der Kraft einer Feder in Richtung des Ventilkörpers der Rückschlagventile verstellbarer Entriegelungskolben zugeordnet ist, die zum Aufbau eines wählbaren Druckmitteldruckes in den Druckräumen des Spannzylinders unmittelbar oder über Zwischenglieder, beispielsweise über die Betätigungskolben, gleichzeitig auf die Ventilkörper der Rückschlagventile einwirken, und dass den Druckräumen der Entriegelungskolben das Druckmittel über einen diesen vorzugsweise gemeinsamen Drehverteiler gesteuert zuführbar ist.

Zweckmäßig ist es hierbei, die Entriegelungskolben und die Betätigungskolben der Rückschlagventile mittig zu deren Ventilkörpern axial hintereinander und achsparallel zu dem Spannkolben anzuordnen.

Angebracht ist es ferner, an die den Druckräumen des Spannzylinders zugeordneten Druckmittelzuführungsleitungen außerhalb des Spannzylinders jeweils einen vorzugsweise mit einem Manometer versehenen Druckschalter anzuschließen, mittels denen in Abhängigkeit von dem aufgebauten Druck Schaltsignale abrufbar sind, wobei den Druckschaltern jeweils ein in die Druckmittelzuführungsleitungen eingesetztes Wegeventil nachgeschaltet und ein vorzugsweise motorisch angetriebenes Proportionalventil vorgeschaltet sein sollte.

Auch in die Druckmittelzuführungsleitung zu dem den Druckräumen der Entriegelungskolben zugeordneten Drehverteiler sollte ein Wegeventil eingesetzt und diesem ein Druckregelventil vorgeschaltet sein.

Vorteilhaft ist es des Weiteren, die Rückschlagventile in ein an dem Zylindergehäuse angeformtes Ansatzstück einzusetzen, das durch ein Zwischenstück verschlossen ist, und mit dem Zwischenstück eine Hohlwelle zu verbinden, auf der stationär angeordnete Drehverteiler für das den Druckräumen des Spannkolbens, den Rückschlagventilen und/oder den Entriegelungskolben zuführbares Druckmittel abgestützt sind.

An die Druckräume oder Aufnahmekammern des Spannkolbens, der Betätigungskolben, der Entriegelungskolben und/oder an die Drehverteiler sollten Rücklauf- oder Entlüftungsleitungen für das Druckmedium angeschlossen sein.

Die beaufschlagten Flächen der jeweils zusammenwirkenden Entriegelungs- und Betätigungskolben sollten derart ausgelegt sein, dass die von einem Entriegelungskolben bei dessen Beaufschlagung aufgebrachte Druckkraft größer bemessen ist als die mittels des jeweiligen Betätigungskolbens der Rückschlagventile erzeugte Gegenkraft.

Angezeigt ist es auch, bei einer geringen Druckdifferenz in den Druckräumen des Spannzylinders das dem Druckraum mit dem höheren Druckmitteldruck zugeordnete Absperrventil mit seinem Druckraum an die Druckleitung mit dem niederen Druckmitteldruck und das dem anderen Druckraum zugeordneten Absperrventil mit seinem Druckraum an die Druckleitung mit dem höheren Druckmitteldruck anzuschließen und den dem Druckraum des Betätigungskolbens gegenüberliegenden Raum des Rückschlagventils von der Druckmittelzufuhr zu trennen und zu entlüften.

Der Drehverteiler für das den Entriegelungskolben zuzuführende Druckmittel sollte durch eine in eine in die Hohlwelle und einem auf dieser ortsfest angeordneten Bauteil angearbeitete Ringnut eingesetzte entgegen der Kraft einer Feder begrenzt axial verstellbare Scheibe gebildet sein, die auf der Innenmantelfläche eine in Achsrichtung geneigte Druckfläche aufweist und die beiderseits an an der Hohlwelle angearbeitete Dichtflächen anlegbar ist, wobei die Hohlwelle mit einer mit Abstand zu der Druckfläche des ortsfesten Bauteils angeordneten korrespondierenden Gegenfläche versehen sein sollte. Auf diese Weise ist eine Druckmittelübertragung möglich, ohne dass Querkräfte entstehen und abgestützt werden müssen.

Das Verfahren zum Aufbau eines wählbaren Druckmitteldruckes in den Druckräumen eines derartig ausgebildeten Spannzylinders ist dadurch gekennzeichnet, dass zunächst in den Druckräumen der beiden Entriegelungskolben ein einstellbarer Druckmitteldruck aufgebaut wird, aufgrund dessen die beiden Rückschlagventile geöffnet und in geöffneter Stellung gehalten werden, dass sodann einem der Druckräume des Spannkolbens Druckmittel zugeführt und der andere Druckraum entlüftet wird bzw. dass beide Druckräume mit unterschiedlichen Drücken beaufschlagt werden, und dass letztlich die Druckmittelzufuhr zu den Druckräumen der Entriegelungskolben abgeschaltet wird, so dass diese in Ausgangslage zurückgeführt werden und das von dem höheren Druckmitteldruck beaufschlagte Rückschlagventil geschlossen wird.

Wird ein Spannzylinder gemäß der Erfindung ausgebildet, so ist es problemlos und mit geringem Bauaufwand möglich, in den Druckräumen des Spannkolbens einen jeweils wählbaren Druck aufzubauen und dazu die Absperrventile zwangläufig zu öffnen, so dass die Druckmittelzufuhr nicht beeinträchtigt und in kurzer Zeit eine Druckabsenkung oder eine Druckerhöhung vorzunehmen ist. Durch die gesondert steuerbaren Entriegelungskolben können nämlich die Absperrventile gemeinsam geöffnet und offen gehalten werden, Änderungen des Druckmitteldruckes in den Druckräumen sind demnach ohne Schwierigkeiten zu bewerkstelligen.

Durch die achsparallele Anordnung der Rückschlagventile und der Entriegelungskolben zu dem Spannzylinder ist des Weiteren gewährleistet, dass deren Funktion auch bei hohen Drehzahlen durch Fliehkräfte nicht beeinträchtigt werden und dass das Öffnen und Schließen der Rückschlagventile nur erfolgt, wenn dies in Abhängigkeit vom Arbeitsablauf erforderlich ist. Trotz der Entriegelungskolben bleibt die Sicherheitsfunktion der Rückschlagventile erhalten, diese können aber fallweise entsperrt werden.

Der Bauaufwand, mit dem dies ermöglicht wird, ist sehr gering, da lediglich den Rückschlagventilen jeweils ein Entriegelungskolben zuzuordnen ist, denen das Druckmittel im Stillstand des Spannzylinders über einen gesonderten Drehverteiler zugeführt wird. Leckverluste sind somit ebenfalls unbedeutend. Da aber die auf ein zu bearbeitendes Werkstück einwirkenden Spannkräfte mit Hilfe des vorschlagsgemäß ausgebildeten Spannzylinders an den jeweiligen Arbeitsvorgang ohne Schwierigkeiten anzupassen sind, ist bei hoher Betriebssicherheit eine äußerst vielseitige Verwendbarkeit des Spannzylinders gegeben.

In der Zeichnung ist ein Ausführungsbeispiel eines gemäß der Erfindung ausgebildeten Spannzylinders für Werkzeugmaschinen dargestellt, das nachfolgend im einzelnen erläutert ist. Hierbei zeigen:
- Figuren 1 bis 3: den Spannzylinder mit Schaltplan und den in diesen integrierten Hydraulikaggregaten, jeweils in unterschiedlichen Betriebsstellungen und in schematischen Darstellungen,
- Figuren 4 und 5: den Spannzylinder in den Betriebsstellungen nach den Figuren 1 und 2, jeweils in einem Axialschnitt, und
- Figuren 6 und 7: das bei dem Spannzylinder nach den Figuren 4 und 5 vorgesehene Rückschlagventil mit Entriegelungskolben in vergrößerten Darstellungen und unterschiedlichen Ausgestaltungen.

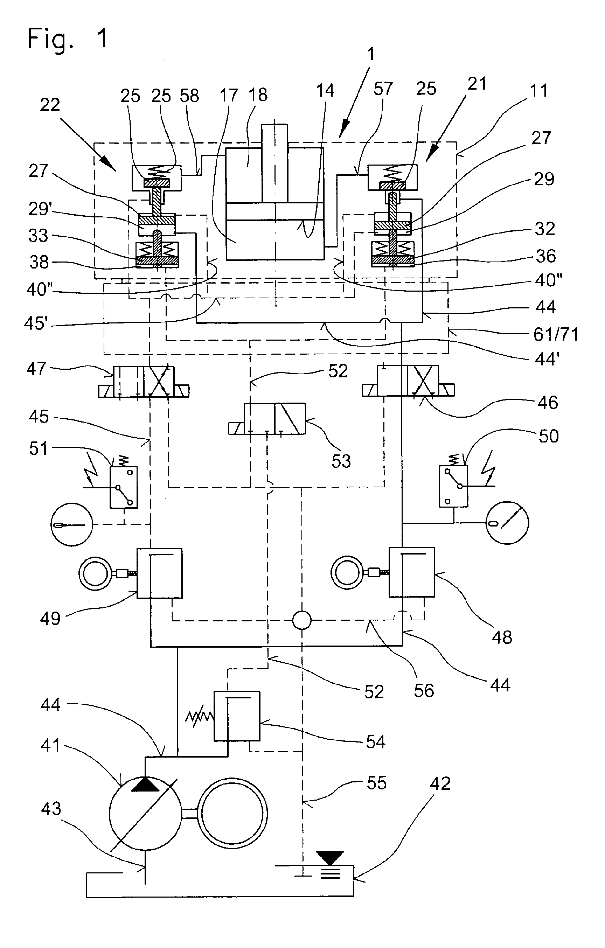

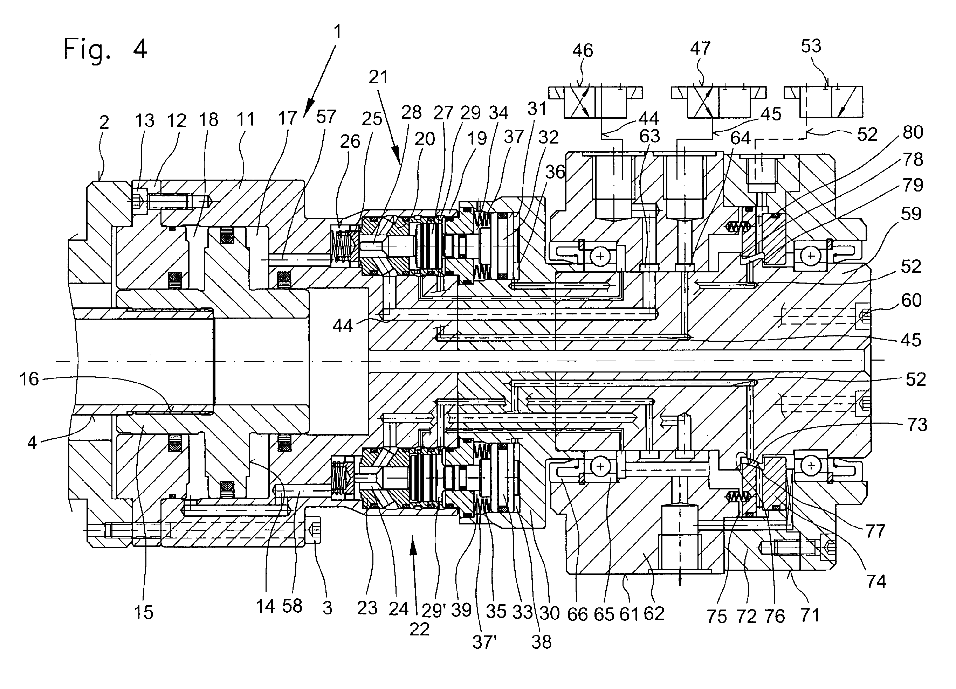

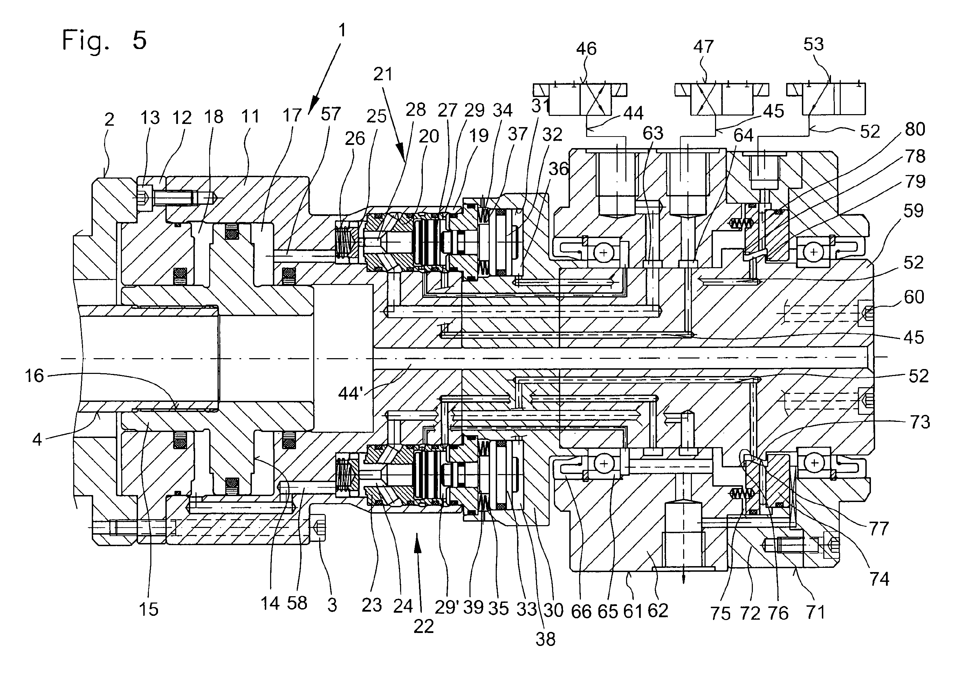

Der in den Figuren 1 bis 3 schematisch und in den Figuren 4 und 5 jeweils in einem Axialschnitt dargestellte und mit 1 bezeichnete Spannzylinder ist an der Rückseite einer Werkzeugmaschine 2 angeflanscht und dient zur Verstellung der Spannglieder, beispielsweise der Spannbacken, eines Kraftspannfutters, das auf der gegenüberliegenden Seite der Werkzeugmaschine 2 angeordnet und in dem ein zu bearbeitendes Werkstück eingespannt ist. Der Spannzylinder 1 besteht hierbei im wesentlichen aus einem Zylindergehäuses 11 und einem in diesem axial verschiebbar eingesetzten beidseitig von Druckmittel beaufschlagbaren Spannkolben 14, an dessen Kolbenstange 15 mittels eines Gewindes 16 eine Zugstange 4 befestigt ist, die mit den Spanngliedern des Kraftspannfutters trieblich verbunden ist. Mit Hilfe von Schrauben 3 ist der Spannzylinder 1 an der Werkzeugmaschine 2 angebracht. Durch einen Deckel 12, der mittels Schrauben 13 an dem Zylindergehäuse 11 befestigt ist, ist dieses verschlossen.

Den beidseits des Spannkolbens 14 in dem Zylindergehäuses 11 vorgesehenen Druckräumen 17 und 18 wird das Druckmittel, wie dies im einzelnen den Figuren 1 bis 3 zu entnehmen ist, von einer Förderpumpe 41 über Druckleitungen 44 bzw. 45 zugeführt, in denen verschiedene Hydraulikaggregate eingesetzt sind.

Den Druckräumen 17 und 18 des Spannzylinders 1 sind jeweils in Ausnehmungen 20 eines an dem Zylindergehäuse 11 angeformten Ansatzstückes 19 eingesetzte Rückschlagventile 21 bzw. 22 zugeordnet, durch die der Druckmitteldruck in den Druckräumen 17 bzw. 18 eingesperrt wird, so dass bei einer Beschädigung der Druckmittelleitungen 44 und/oder 45 der Spanndruck aufrecht erhalten bleibt und die Einspannung eines Werkstückes nicht beeinträchtigt wird.

Die Rückschlagventile 21 und 22 bestehen bei dem gezeigten Ausführungsbeispiel jeweils aus einem entgegen der Kraft einer Ventilfeder 26 verstellbaren Ventilkörper 25 und einem Betätigungskolben 27, die gemeinsam in einer in einem Einsatzstück 23 eingearbeiteten Stufenbohrung 24 angeordnet sind. Der Betätigungskolben 27 ist hierbei mit einem Stößel 28 ausgestattet, der bei Beaufschlagung des Betätigungskolbens 27 durch Druckmittelzuführung in den zugeordneten Druckraum 29 bzw. 29' auf den Ventilkörper 25 einwirkt, so dass das Rückschlagventil 21 bzw. 22 geöffnet wird.

Mit den Rückschlagventilen 21 und 22 wirkt jeweils ein Entriegelungskolben 32 bzw. 33 zusammen, die in in ein Zwischenstück 30 eingearbeitete Bohrungen 31 eingesetzt sind. Wird den den Entriegelungskolben 32 und 33 zugeordneten Druckräumen 36 bzw. 38 Druckmittel zugeführt, werden die Entriegelungskolben 32 und 33 beaufschlagt, und diese werden entgegen der Kraft von Federn 34 bzw. 35 in Richtung der Betätigungskolben 27 der Rückschlagventile 21, 22 verschoben. Die den Druckräumen 36 und 38 der Entriegelungskolben 31 und 33 gegenüberliegenden Räume 37 und 39 sind dagegen über Bohrungen 37' entlüftet. Auch die den Druckräumen 29 und 29' der Betätigungskolben 27 gegenüberliegenden Räume 40 sind in gleicher Weise entlüftet.

Dem Spannzylinder 1 wird Druckmittel von der Förderpumpe 41 zugeleitet, die über eine Saugleitung 43 an einen Vorratsbehälter 42 angeschlossen ist. Über die Druckleitungen 44 und 45, in denen Wegeventile 46 bzw. 47 eingesetzt sind, wird das Druckmittel, wie dies insbesondere den Figuren 1 bis 3 zu entnehmen ist, den Druckräumen 17 oder 18 des Spannzylinders 1 zugeführt. Den Wegeventilen 46 und 47 sind motorisch angetriebene Proportionalventile 48 bzw. 49 vorgeschaltet, mittels denen der jeweils gewünschte Druck eingestellt werden kann. Außerdem stehen die Druckleitungen 44 und 45 mit Druckwächtern 50 bzw. 51 in Verbindung, von denen Schaltsignale in Abhängigkeit von dem in den Druckleitungen 44 und 45 herrschenden Druck abrufbar sind, um die Steuerung der Werkzeugmaschine 2 zu beeinflussen und diese gegebenenfalls still zu setzen.

Gemäß Figur 1 wird Druckmittel von der Förderpumpe 41 über die Druckleitung 44 dem Absperrventil 21 zugeführt, das durch Beaufschlagung des Ventilkörpers 25 geöffnet wird, so dass das Druckmittel über eine Leitung 57 in den Druckraum 17 einströmt. Außerdem ist der Druckraum 29' des Rückschlagventils 22 über eine Zweigleitung 44' mit der Druckleitung 44 verbunden. Durch den von Druckmittel beaufschlagten Betätigungskolben 27 des Rückschlagventils 22 ist somit dieses geöffnet, so dass der Druckraum 18 des Spannzylinders 1 über eine Leitung 58 mit der Druckleitung 45, die entlüftet ist, verbunden ist. Der Spannkolben 14 kann somit mit hohem Druckmittel beaufschlagt und ein Werkstück kann mit hoher Kraft in dem Spannfutter eingespannt werden.

Außerdem ist über eine an die Druckleitung 45 angeschlossene Zweigleitung 45' der Druckraum 29 des Betätigungskolbens 27 des Rückschlagventils 21 ebenfalls entlüftet, dessen Ventilkörper 25 wird somit nur durch das dem Absperrventil 21 zugeleitete Druckmittel beeinflusst und durch die Ventilfeder 26 in der dargestellten Schließstellung gehalten. Über Rücklaufleitungen 55 und 56 sind die Wegeventile 46, 47 sowie die Proportionalventile 48 und 49 an den Vorratsbehälter 42 angeschlossen. Da die den Druckräumen 29 bzw. 29' gegenüberliegenden Räume 40 über Bohrungen 40' und Leitungen 40" ständig entlüftet sind, ist stets eine Verstellung der Betätigungskolben 27 bei deren Beaufschlagung gewährleistet.

Zur Überleitung des Druckmittels von den Druckleitungen 44 und 45 in die Rückschlagventile 21 und 22 dient, wie dies in den Figuren 4 und 5 dargestellt ist, ein Drehverteiler 61, der aus einem mittels Schrauben 60 mit dem Spannzylinder 1 fest verbundenen Hohlwelle 59 und einem ortsfest angeordneten Bauteil 62 besteht. In das Bauteil 62 sind hierbei umlaufende Ringnuten 63 und 64 eingearbeitet, an die die Druckleitungen 44 und 45 angeschlossen sind, und die Hohlwelle 59 ist mit Kanälen versehen, die die Druckleitungen 44, 44' bzw. 45, 45' bilden. Mit Hilfe von Lagern 65 und Dichtungen 66 ist das Bauteil 62 auf der Hohlwelle 59 abgestützt.

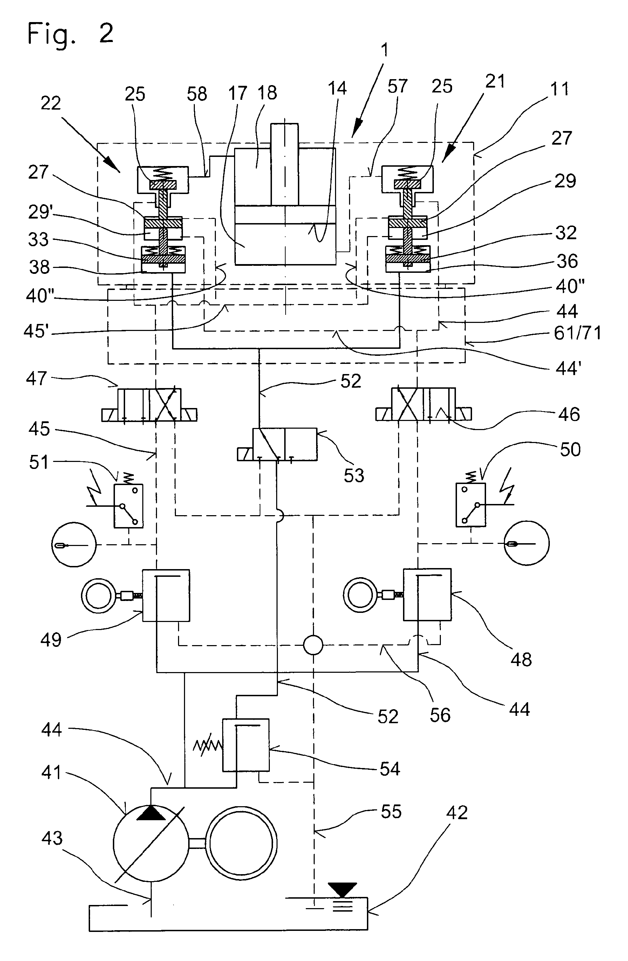

Um die auf das eingespannte Werkstück durch den Spannzylinder 1 ausgeübte Spannkraft verändern zu können, beispielsweise ist die Spannkraft derart abzusenken, dass nach Schrupparbeiten eine Feinbearbeitung auszuführen ist, sind zunächst beide Druckräume 17 und 18 des Spannzylinders 14 zu entlüften, und in dem Druckraum 18 ist sodann ein niederer Druck aufzubauen. Dies wird in der Weise bewerkstelligt, dass gemäß Figur 2 den Druckräumen 36 und 38 der Entriegelungskolben 32 und 33 gleichzeitig über eine Druckleitung 52 Druckmittel zugeführt wird. Durch die Entriegelungskolben 32 und 33 werden dadurch die Rückschlagventile 21 und 22 gemeinsam entgegen den anstehenden Drücken zwangsgeöffnet, so dass die Druckräume 17 und 18 über die Druckleitungen 44 und 45 entlüftet sind.

Die Druckmittelzufuhr erfolgt nunmehr über die an die Druckleitung 44 angeschlossene, ebenfalls mit einem Wegeventil 53 und einem Druckregelventil 54 versehene Druckleitung 52, die über einen gesonderten Drehverteiler 71 im Stillstand des Spannzylinders 1 mit den Druckräumen 36 und 38 verbunden ist.

Der der Druckleitung 52 zugeordnete Drehverteiler 71 besteht wiederum aus einem auf der Hohlwelle 59 abgestützten ortsfest angeordneten Bauteil 72, in das eine Ringnut 73 eingearbeitet ist, und eine in dieser eingesetzte ringförmigen Scheibe 74, die bei Beaufschlagung entgegen der Kraft einer Feder 75 axial verschiebbar ist. Die Scheibe 74 ist auf der Innenmantelfläche mit einer zur Längsachse der Hohlwelle 59 geneigt verlaufenden Druckfläche 76 versehen, und die Hohlwelle 59 weist eine korrespondierend ausgebildete Gegenfläche 77 auf, so dass bei einer Druckmittelübertragung die axial gerichteten Kräfte nahezu ausgeglichen sind und sich aufheben.

Wird dem Drehverteiler 71 über die Druckmittelleitung 52 Druckmittel zugeführt, so wird die Scheibe 74 entgegen der Kraft der Feder 75 gegen an der Hohlwelle 59 angearbeitete Dichtflächen 78 und 79 gepresst, so dass das zugeführte Druckmittel über in der Scheibe 74 eingearbeitete radial gerichtete Kanäle 80 in die die Druckleitung 52 bildende in der Hohlwelle 59 vorgesehene Kanäle und somit zu den Druckräumen 36 und 38 der Entriegelungskolben 32, 33 gelangt.

Selbstverständlich kann zur Übertragung des den Entriegelungskolben 32 und 33 zuzuführenden Druckmittels auch eine Drehverteiler-Ausgestaltung gemäß dem Drehverteiler 61 gewählt werden.

Nach dem Umschalten des Wegeventils 53 in die in Figur 1 dargestellte Schaltstellung werden die Druckräume 36 und 38 entlüftet, die Entriegelungskolben 32 und 33 werden somit durch die Kraft der Federn 34 und 35 in die Endlage zurückgeführt, so dass die Rückschlagventile 21 und 22 wiederum ihre Funktion erfüllen können. In den Druckräumen 17 und 18 kann in diesem Betriebszustand ein mit Hilfe der Proportionalventile 48 und 49 wählbarer Druck aufgebaut werden.

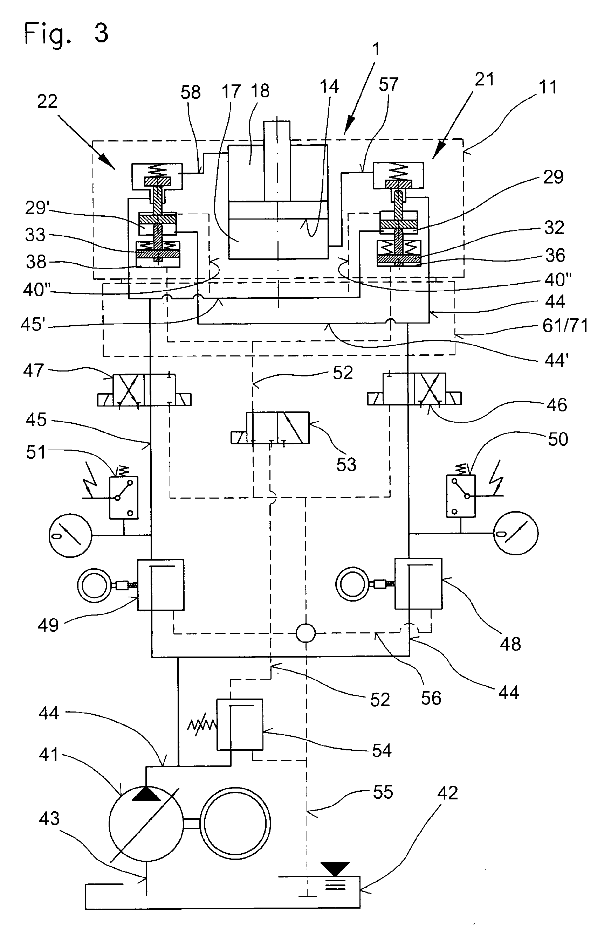

Es ist aber auch möglich, wie dies in Figur 3 gezeigt ist, in beiden Druckräumen 17 und 18 des Spannzylinders 1 Druckmitteldrücke aufzubauen, die nur geringfügig voneinander differieren und mit Hilfe der Proportionalventile 48 und 49 einstellbar sind. Das eingespannte Werkstück wird somit ebenfalls mit geringer Spannkraft, die sich aus der Differenz der Spannmitteldrücke in den Druckräumen 17 und 18 ergibt, gehalten. Dem Druckraum 17 wird hierbei wie in dem in Figur 1 dargestellten Betriebszustand Druckmittel zugeführt, und der Ventilkolben 27 des Rückschlagventils 22 wird von dem in der Druckmittelleitung 44 eingestellten Druck beaufschlagt, so dass das Rückschlagventil 22 geöffnet wird. In dem Druckraum 18 kann somit der in der Druckleitung 45 herrschende Druck aufgebaut werden, der Spannkolben 14 wirkt demnach nur mit der sich aus der Druckdifferenz ergebenden Kraft auf das eingespannte Werkstück ein.

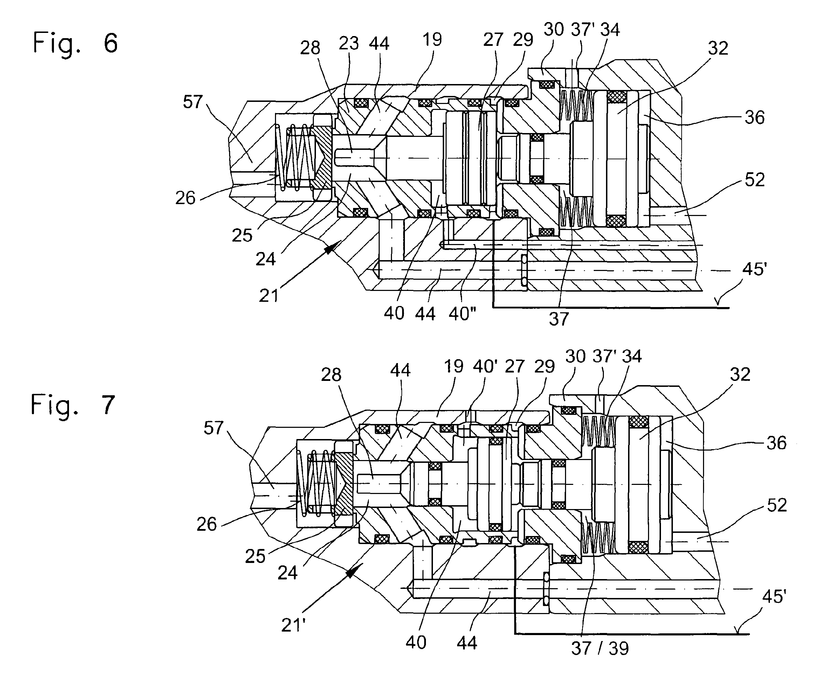

Die Figur 6 ist in vergrößerter Darstellung das in Spannzylinder 1 eingebaute Rückschlagventil 21 mit zugeordnetem Entriegelungskolben 32 wiedergegeben.

Der Betätigungskolben 27 und der Stößel 28 sind hierbei im Einsatzstück 23 mit geringem Dichtspiel geführt. Die in dem entlüfteten Raum 40 anfallende geringe Leckage wird über den an diesem angeschlossenen Kanal 40" in den Drehverteiler 61/71 zurückgeführt. Diese Ausgestaltung eignet sich in besonderer Weise für Spannzylinder, mittels denen niederste Spanndrücke aufzubringen sind.

Bei einer Ausgestaltung des Ventils 21' nach Figur 7 ist dagegen der Raum 40 gegenüber dem Druckraum 29 und dem gegenüberliegenden Raum 24 mittels O-Ringen gedichtet. Der leckagefreie Raum 40 ist somit über die Bohrung 40' direkt mit der Atmosphäre verbunden. Das Ventil 21' wird, da die Reibkräfte der Dichtungen zu überwinden sind, für Spannzylinder eingesetzt, bei denen hohe Spanndrücke vorgesehen sind.

## Patentansprüche

1. Spannzylinder (1) für Werkzeugmaschinen (2) mit einem an dieser zu befestigenden umlaufenden Zylindergehäuse (11) und einem in diesen eingesetzten beidseitig von Druckmittel beaufschlagbaren Spannkolben (14), dessen Druckräumen (17, 18) das Druckmittel über mindestens ein in dem Zylindergehäuse (11) angeordnetes, steuerbares und mit einem axial verstellbaren Ventilkörper (25) versehenen Rückschlagventil (21 bzw. 22) wechselweise zuführbar ist, wobei die Rückschlagventile (21, 22) mit Betätigungskolben (27) versehen sind, deren Druckräume (29, 29') zum wechselseitigen Öffnen der Rückschlagventile (21, 22) mit dem beaufschlagten Druckraum (18 bzw. 17) des Spannzylinders (11) verbindbar sind,
**dadurch gekennzeichnet,**
**dass** den Rückschlagventilen (21, 22) jeweils ein durch Druckmittel entgegen der Kraft einer Feder (34, 35) in Richtung des Ventilkörpers (25) der Rückschlagventile (21, 22) verstellbaren Entriegelungskolben (32, 33) zugeordnet ist, die zum Aufbau eines wählbaren Druckmitteldruckes in den Druckräumen (17, 18) des Spannzylinders (11) unmittelbar oder über Zwischenglieder, beispielsweise über die Betätigungskolben (27), gleichzeitig auf die Ventilkörper (25) der Rückschlagventile (21, 22) einwirken, und dass den Druckräumen (36, 38) der Entriegelungskolben (32, 33) das Druckmittel über einen diesen vorzugsweise gemeinsamen Drehverteiler (71) gesteuert zuführbar ist.

2. Spannzylinder für Werkzeugmaschinen nach Anspruch 1,
**dadurch gekennzeichnet,**
**dass** die Entriegelungskolben (32, 33) und die Betätigungskolben (27) der Rückschlagventile (21, 22) mittig zu deren Ventilkörpern (25) axial hintereinander mit diesen und achsparallel zu dem Spannkolben (14) angeordnet sind.

3. Spannzylinder für Werkzeugmaschinen nach Anspruch 1 oder 2,
**dadurch gekennzeichnet,**
**dass** an die den Druckräumen (17, 18) des Spannzylinders (11) zugeordneten Druckmittelzuführungsleitungen (44, 45) außerhalb des Spannzylinders (11) jeweils ein vorzugsweise mit einem Manometer versehener Druckschalter (50, 51) angeschlossen ist, mittels denen in Abhängigkeit von dem aufgebauten Druck Schaltsignale abrufbar sind.

4. Spannzylinder für Werkzeugmaschinen nach Anspruch 3,
**dadurch gekennzeichnet,**
**dass** den Druckschaltern (50, 51) jeweils ein in die Druckmittelzuführungsleitungen (44, 45) eingesetztes Wegeventil (46, 47) nachgeschaltet und ein vorzugsweise motorisch angetriebenes Proportionalventil (48, 49) vorgeschaltet ist.

5. Spannzylinder für Werkzeugmaschinen nach einem oder mehreren der Ansprüche 1 bis 4,
**dadurch gekennzeichnet,**
**dass** in die Druckmittelzuführungsleitung (52) zu dem den Druckräumen (36, 38) der Entriegelungskolben (32, 33) zugeordneten Drehverteiler (71) ein Wegeventil (53) eingesetzt und diesem ein Druckregelventil (54) vorgeschaltet ist.

6. Spannzylinder für Werkzeugmaschinen nach einem oder mehreren der Ansprüche 1 bis 5,
**dadurch gekennzeichnet,**
**dass** die Rückschlagventile (21, 22) in einem an dem Zylindergehäuse (11) angeformten Ansatzstück (19) eingesetzt sind, das durch ein Zwischenstück (30) verschlossen ist.

7. Spannzylinder für Werkzeugmaschinen nach Anspruch 6,
**dadurch gekennzeichnet,**
**dass** mit dem Zwischenstück (30) eine Hohlwelle (59) verbunden ist, auf der stationär angeordnete Drehverteiler (61, 71) für das den Druckräumen (17, 18) des Spannkolbens (14), den Rückschlagventilen (21, 22) und/oder den Entriegelungskolben (32, 33) zuführbares Druckmittel abgestützt sind.

8. Spannzylinder für Werkzeugmaschinen nach einem oder mehreren der Ansprüche 1 bis 7,
**dadurch gekennzeichnet,**
**dass** an die Druckräume (17, 18) des Spannkolbens (14), der Betätigungskolben (27), der Entriegelungskolben (32, 33) und/oder die Drehverteiler (61, 71) Rücklaufleitungen (55, 56) für das Druckmedium oder Entlüftungsleitungen (40', 37') angeschlossen sind.

9. Spannzylinder für Werkzeugmaschinen nach einem oder mehreren der Ansprüche 1 bis 8,
**dadurch gekennzeichnet,**
**dass** die beaufschlagten Flächen der jeweils zusammenwirkenden Entriegelungskolben (32, 33) und Betätigungskolben (27) derart ausgelegt sind, dass die von einem Entriegelungskolben (32, 33) bei dessen Beaufschlagung aufgebrachte Druckkraft größer bemessen ist als die mittels des jeweiligen Betätigungskolbens (27) der Rückschlagventile (21, 22) erzeugte Gegenkraft.

10. Spannzylinder für Werkzeugmaschinen nach einem oder mehreren der Ansprüche 1 bis 9,
**dadurch gekennzeichnet,**
**dass** bei einer geringen Druckdifferenz in den Druckräumen (17, 18) des Spannzylinders (1) das dem Druckraum (17) mit dem höheren Druckmitteldruck zugeordnete Absperrventil (21) mit seinem Druckraum (29) an die Druckleitung (45, 45') mit dem niederen Druckmitteldruck und das dem anderen Druckraum (18) zugeordneten Absperrventil (22) mit seinem Druckraum (29') an die Druckleitung (44, 44') mit dem höheren Druckmitteldruck angeschlossen sind.

11. Spannzylinder für Werkzeugmaschinen nach einem oder mehreren der Ansprüche 1 bis 10,
**dadurch gekennzeichnet,**
**dass** der dem Druckraum (29) des Betätigungskolbens (27) gegenüberliegende Raum (40) des Rückschlagventils (21') von der Druckmittelzufuhr getrennt und entlüftet ist.

12. Spannzylinder für Werkzeugmaschinen nach einem oder mehreren der Ansprüche 1 bis 10,
**dadurch gekennzeichnet,**
**dass** der Drehverteiler (71) für das den Entriegelungskolben (32, 33) zuzuführende Druckmittel durch eine in eine in die Hohlwelle (59) und ein auf dieser ortsfest angeordnetes Bauteil (72) angearbeitete Ringnut (73) eingesetzte entgegen der Kraft einer Feder (75) begrenzt axial verstellbare Scheibe (74) gebildet ist, die auf der Innenmantelfläche eine in Achsrichtung geneigte Druckfläche (76) aufweist, die beiderseits an an der Hohlwelle (59) angearbeitete Dichtflächen (78, 79) anlegbar ist.

13. Spannzylinder für Werkzeugmaschinen nach Anspruch 11,
**dadurch gekennzeichnet,**
**dass** die Hohlwelle (59) mit einer mit Abstand zu der Druckfläche (76) des ortsfesten Bauteils (72) angeordneten korrespondierenden Gegenfläche (77) versehen ist.

14. Verfahren zum Aufbau eines wählbaren Druckmitteldruckes in den Druckräumen (17, 18) eines nach den Ansprüchen 1 bis 13 ausgebildeten Spannzylinders (1),
**dadurch gekennzeichnet,**
**dass** zunächst in den Druckräumen (36, 38) der beiden Entriegelungskolben (32, 33) ein einstellbarer Druckmitteldruck aufgebaut wird, aufgrund dessen die beiden Rückschlagventile (21, 22) geöffnet und in geöffneter Stellung gehalten werden, dass sodann einem der Druckräume (17 bzw. 18) des Spannkolbens (14) Druckmittel zugeführt und der andere Druckraum (18 bzw. 17) entlüftet wird bzw. dass beide Druckräume (17, 18) mit unterschiedlichen Drücken beaufschlagt werden, und dass letztlich die Druckmittelzufuhr zu den Druckräumen (36, 38) der Entriegelungskolben (32, 33) abgeschaltet wird, so dass diese in Ausgangslage zurückgeführt werden und das von dem hohen Druckmitteldruck beaufschlagte Rückschlagventil (21 bzw. 22) geschlossen wird.
